# EUROPÄISCHE PATENTANMELDUNG

(11) **EP 3 106 761 A1**
(43) Veröffentlichungstag der Anmeldung: **21.12.2016**
(21) Anmeldenummer: 16001342.1
(22) Anmeldetag: 14.06.2016
(51) Int. Cl.: F24D 3/00, F24J 2/40, F24J 2/46

(54) **VORRICHTUNG ZUR WÄRMEVERSORGUNG EINES WÄRMEVERBRAUCHERS**

(30) Priorität: 19.06.2015 DE 102015007787
(71) Anmelder: Schwarz, Alexander, 86199 Augsburg (DE)
(72) Erfinder: Schwarz, Alexander, 86199 Augsburg (DE)
(74) Vertreter: Munk, Ludwig

(57) **Zusammenfassung**

Bei einer Vorrichtung zur Versorgung eines Wärmeverbrauchers (4) mit ambivalent erzeugbarer Wärme mit einem alle Komponenten der Vorrichtung enthaltenden Installationssystem (3), über das der Verbraucher (4) mit einer Kollektoranordnung (1) und einer dieser beigeordneten, konventionellen Wärmequelle (2) wärmetransportmäßig zusammenhängt, werden dadurch eine universelle Verwendbarkeit und gute Wirtschaftlichkeit erreicht, dass die von der Kollektoranordnung (1) erzeugte Wärme ohne Zwischenspeicherung unmittelbar direkt oder indirekt dem Verbraucher (4) zuführbar ist, wobei das Installationssystem (3) zwischenspeicherlos ausgebildet und die Kollektoranordnung (1) mit einer Verschattungseinrichtung (5) versehen ist, die in Abhängigkeit von der Kollektortemperatur steuerbar ist.

## Beschreibung

Die Erfindung betrifft eine Vorrichtung zur Versorgung eines Wärmeverbrauchers mit ambivalent erzeugbarer Wärme mit einem alle Komponenten der Vorrichtung enthaltenden Installationssystem, über das der Verbraucher mit einer Kollektoranordnung und einer dieser beigeordneten, konventionellen Wärmequelle wärmetransportmäßig zusammenhängt.

Die bisher gebräuchlichen Solarsysteme beruhen auf der vorherrschenden Meinung, dass die in Zeiten mit guter Sonneneinstrahlung anfallende, überschüssige Wärme für Zeiten mit wenig oder fehlender Sonneneinstrahlung gespeichert werden muss. Die bekannten Anordnungen sind daher mit vergleichsweise großen Speichern, bei denen es sich um vergleichsweise große Warmwasserboiler handelt, ausgestattet. Die Erfahrung hat jedoch gezeigt, dass auch bei großen Speichern die gespeicherte Wärme vergleichsweise schnell verbraucht ist, so dass dennoch eine zusätzliche konventionelle Wärmequelle benötigt wird. Die großen Speicher benötigen viel Platz, der vielfach nicht vorhanden ist, sowie einen hohen Investitions- und Montageaufwand. Die bekannten Anordnungen erweisen sich daher als nicht einfach und kostengünstig und universell verwendbar genug.

Aus der DE 10 2004 028 622 A1 ergibt sich ein Kollektor mit nachgeordnetem Speicher zur Speicherung eines durch den Kollektor erwärmten Wärmeträgers, wobei dem Kollektor eine Verschattungseinrichtung zugeordnet ist, die in Abhängigkeit von einem kritischen Parameter mehr oder weniger ein- bzw. ausgefahren werden kann, um Beschädigungen des Kollektors durch Dampfbildung etc. zu vermeiden. Dieser bekannte Vorschlag geht dabei davon aus, dass die vom Kollektor erzeugbare Wärme trotz Speicherung unter Umständen nicht voll abgenommen werden kann, so dass es zu einer Überhitzung innerhalb des Kollektors kommen kann, was durch eine Verschattung des Kollektors verhindert werden soll. Unabhängig davon wird jedoch von der Notwendigkeit eines Speichers ausgegangen.

Hiervon ausgehend ist es daher die Aufgabe der vorliegenden Erfindung, eine Vorrichtung eingangs erwähnter Art zu schaffen, die einfach und kostengünstig aufgebaut und montierbar ist und auch bei Anwendungsfällen mit geringem Platzangebot zum Einsatz kommen kann.

Diese Aufgabe wird erfindungsgemäß dadurch gelöst, dass die von der Kollektoranordnung erzeugte Wärme ohne Zwischenspeicherung unmittelbar dem Verbraucher zuführbar ist, wobei das alle Komponenten der Vorrichtung enthaltende Installationssystem zwischenspeicherlos ausgebildet und die Kollektoranordnung mit einer Verschattungseinrichtung versehen ist, die in Abhängigkeit von der Kollektortemperatur steuerbar ist.

Die erfindungsgemäße Vorrichtung verzichtet in vorteilhafter Weise auf einen Speicher, wodurch der hierdurch verursachte Investitions- und Montageaufwand sowie Platzbedarf wegfällt. Andererseits stellt die Kollektoranordnung eine sowohl hinsichtlich des Investitionsaufwands als auch des Montageaufwands günstige Komponente dar, so dass die Kollektoranordnung ohne Weiteres etwas größer als bei vergleichbaren Anordnungen sein kann, d.h. überdimensioniert sein kann, und die erforderlichen Investitionskosten dennoch in Grenzen bleiben. Da die Kollektoranordnung in der Regel im Außenbereich angeordnet wird, ergibt sich im Innenbereich auch durch eine überdimensionierte Kollektoranordnung kein zusätzlicher Platzbedarf. Der Montageaufwand ist unabhängig von der Kollektorgröße praktisch gleich. Die der Kollektoranordnung zugeordnete Verschattungseinrichtung stellt sicher, dass die Kollektortemperatur auch im Falle einer vergleichsweise großen Kollektorfläche in jedem Fall in einem zulässigen Bereich gehalten werden kann, um eine teilweise Verdampfung des die Kollektoranordnung durchströmenden Wärmeträgermediums und hieraus resultierende Beschädigungen zu vermeiden. Andererseits kann für den Fall, dass die Kollektoranordnung zu wenig Wärme liefert, die konventionelle Wärmequelle herangezogen werden, deren Betrieb kostengünstig ist. Der Wegfall eines Speichers und die damit verbundene Platzeinsparung ermöglicht einen Einsatz der erfindungsgemäßen Vorrichtung auch bei beengten Verhältnissen, wie sie beispielsweise bei Etagenwohnungen und insbesondere Dachgeschosswohnungen vorliegen. Die erfindungsgemäßen Maßnahmen ermöglichen somit eine universelle Verwendbarkeit und insgesamt eine hohe Wirtschaftlichkeit.

Vorteilhafte Ausgestaltungen und zweckmäßige Fortbildungen der übergeordneten Maßnahmen sind in den Unteransprüchen angegeben.

So kann eine vorteilhafte Maßnahme darin bestehen, dass das Installationssystem einen Wärmetauscher enthält, dessen Wärmeaufnahmeseite an eine über die Kollektoranordnung führende Ringleitung und dessen Wärmeabgabeseite an eine über den Verbraucher führende Ringleitung angeschlossen sind. Hierdurch wird sichergestellt, dass der die Kollektoranordnung durchströmende Wärmeträger nicht mit dem Verbraucher zugeführtem Brauchwasser oder Heizwasser in Kontakt kommt und daher eine Sole sein kann, die einen vergleichsweise hohen Siedepunkt und einen vergleichsweise niedrigen Gefrierpunkt aufweist, was die Betriebssicherheit erhöht.

Zweckmäßig kann die verbraucherseitige Ringleitung eine wahlweise zu- und abschaltbare Schleife mit der konventionellen Wärmequelle enthalten. Dies ermöglicht eine einfache wahlweise Zu- und Abschaltung der konventionellen Wärmequelle. Dies kann zweckmäßig in Abhängigkeit von der Kollektortemperatur erfolgen.

Eine weitere vorteilhafte Maßnahme kann darin bestehen, dass die konventionelle Wärmequelle als Durchlauferhitzer ausgebildet ist, so dass auch diesbezüglich keine Notwendigkeit für einen Speicher besteht.

Eine weitere zweckmäßige Maßnahme kann darin bestehen, dass der Wärmetauscher als Plattenwärmetauscher ausgebildet ist, was sich weiter vorteilhaft auf die gewünschte Kompaktheit der Anordnung auswirkt.

Vorteilhaft weist die Kollektoranordnung eine Kollektorfläche von mindestens 40 m² auf. Dies ermöglicht in vorteilhafter Weise eine vergleichsweise hohe Durchströmgeschwindigkeit, so dass auch im Durchströmbetrieb eine vergleichsweise hohe Wärme erreicht werden kann.

Zweckmäßig ist die Verschattungseinrichtung so gesteuert, dass sie beim Erreichen einer Temperatur von 90° C am Kollektorausgang in Ausfahrrichtung betätigt wird und umgekehrt. Hierdurch wird eine schonende Betriebsweise gewährleistet.

Mit besonderem Vorteil kann die erfindungsgemäße Vorrichtung in Folge ihrer Kompaktheit einer Etagen- und/oder Dachgeschosswohnung zur Erzeugung von Heiz- und/oder Brauchwasser zugeordnet sein.

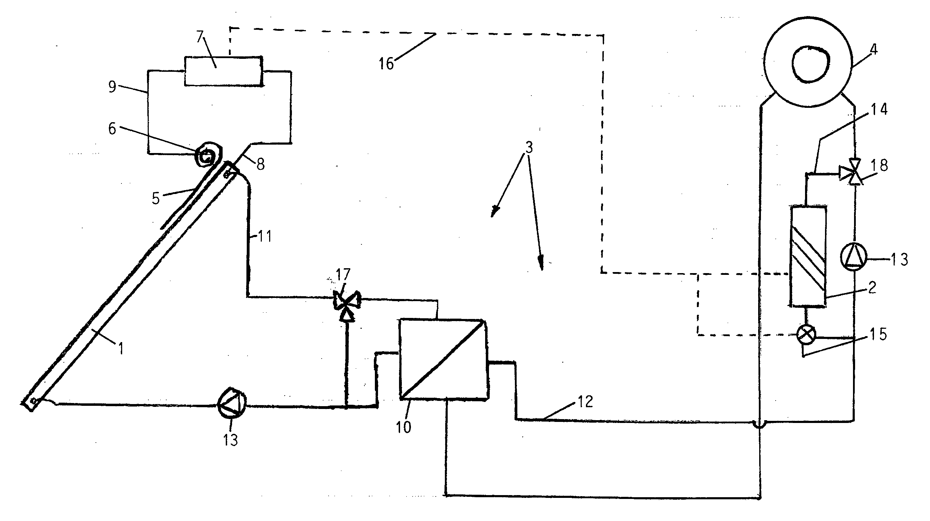

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

Die einzige Figur der Zeichnung zeigt ein Blockschaltbild einer erfindungsgemäßen Vorrichtung.

Die der Zeichnung zugrunde liegende Vorrichtung kann einer beengten Wohneinheit, beispielsweise einer Etagen- und/oder Dachgeschosswohnung zur Erzeugung des benötigten Heiz- bzw. Brauchwassers zugeordnet sein. Die benötigte Wärme wird ambivalent erzeugt, d.h. teilweise bzw. zweckmäßig so weit als möglich auf solarem Wege und der Rest auf konventionelle Weise.

Die Vorrichtung enthält dementsprechend eine Kollektoranordnung 1 und eine konventionelle Wärmequelle 2. Die Kollektoranordnung 1 befindet sich im Außenbereich und ist zweckmäßig auf einem Hausdach montiert, so dass sich in Folge der geneigten Anordnung eine lange Sonneneinstrahlung ergibt. Bei der konventionellen Wärmequelle kann es sich um einen mit einem Brenner und/oder einem elektrischen Heizstab versehenen Durchlauferhitzer handeln. Bei der Kollektoranordnung 1 kann es sich um eine Einheit oder um mehrere, zweckmäßig in Serie geschaltete Einheiten handeln.

Die Kollektoranordnung 1 und die konventionelle Wärmequelle 2 sind in ein Installationssystem 3 integriert und hängen hierüber zusammen, das auch über einen lediglich schematisch angedeuteten Wärmeverbraucher 4 geführt ist. Zur Bildung des Installationssystems 3 finden Leitungen Verwendung, durch die alle für die Wärmeerzeugung und/oder den Wärmetransport nötigen Komponenten der Vorrichtung miteinander verbunden sind.

Die an der Kollektoranordnung 1 anfallende Wärme wird ohne Zwischenspeicherung unmittelbar direkt oder indirekt dem Verbraucher 4 zugeführt. Innerhalb der Installationseinrichtung 3 ist daher kein Speicher beispielsweise in Form eines Boilers etc. vorgesehen. Bei der Installationseinrichtung 3 handelt es sich dementsprechend um eine speicherlose Installationseinrichtung.

Die Kollektorfläche der Kollektoranordnung 1 ist gegenüber Anordnungen für vergleichbaren Bedarf und mit nachgeordnetem Speicher zweckmäßig überdimensioniert. Die Dimensionierung ist zweckmäßig so, dass bei mittlerer Sonneneinstrahlung der Durchschnittswärmebedarf des Verbrauchers 4 im Durchflussbetrieb gedeckt wird. Bei einer Kollektorfläche von mindestens 40 m² ergibt sich dabei erfahrungsgemäß eine vergleichsweise hohe Strömungsgeschwindigkeit des die Kollektoranordnung durchströmenden Wärmeträgermediums, so dass der Verbraucher 4 auch im Durchflussbetrieb zuverlässig versorgt wird.

Um bei voller Sonneneinstrahlung und/oder wenig Wärmebedarf die Temperatur innerhalb der Kollektoranordnung 1 dennoch in zulässigen Grenzen halten zu können und damit einer Beschädigung vorzubeugen, kann die Kollektoranordnung teilweise oder ganz abgedeckt, d.h. verschattet werden. Hierzu ist der Kollektoranordnung 1 eine Verschattungseinrichtung 5 zugeordnet. Dabei kann es sich um einen über der Kollektoroberfläche angeordneten Rollvorhang handeln, dessen Wickelwelle zweckmäßig mittels eines Motors 6 antreibbar ist, der in Abhängigkeit von der Kollektortemperatur aktivierbar ist. Diese wird zweckmäßig auf eine Temperatur von 90° C begrenzt. Hierzu ist eine Steuereinrichtung 7 vorgesehen, die einen Eingang für einen zweckmäßig im Bereich des oberen Kollektorausgangs angeordneten Temperaturfühler 8 aufweist und den Motor 6 so steuert, dass dieser beim Erreichen der genannten Grenztemperatur von 90° C in Abwickelrichtung aktiviert wird und umgekehrt, wie durch eine von der Steuereinrichtung 7 zum Motor 6 führende Signalleitung 9 angedeutet ist. Die Steuereinrichtung 7 kann zweckmäßig als Pendelsteuereinrichtung ausgebildet sein, so dass die maximale Kollektortemperatur um den Grenzwert von 90° C pendelt, wobei eine Bandbreite von vorzugsweise ± 2,5° vorgesehen sein kann.

Für einfache Fälle ist es denkbar, dass das Installationssystem 3 eine einfache Ringleitung bildet, in der die Kollektoranordnung 1 sowie der Verbraucher 4 und wahlweise auch die konventionelle Wärmequelle 2 strömungsmäßig in Serie angeordnet sind. Im dargestellten Beispiel sind die Kollektoranordnung 1 und der Verbraucher 4 strömungsmäßig voneinander getrennt. Hierzu ist zwischen der Kollektoranordnung 1 und dem Verbraucher 4 ein Wärmetauscher 10 vorgesehen, dessen hier der Kollektoranordnung 1 zugewandte Wärmeaufnahmeseite an eine über die Kollektoranordnung 1 führende Ringleitung 11 und dessen gegenüberliegende Wärmeabgabeseite an eine über den Verbraucher 4 führende Ringleitung 12 angeschlossen sind. In den beiden Ringleitungen 11, 12 können unterschiedliche Wärmeträgermedien beispielsweise kollektorseitig Sole und verbraucherseitig Wasser, vorgesehen sein. Beiden Ringleitungen 11, 12 kann jeweils eine Umwälzpumpe 13 zugeordnet sein. Es wäre aber auch denkbar, ohne Umwälzpumpe nur mit thermischem Auftrieb zu arbeiten.

Die konventionelle Wärmequelle 2 kann direkt in die Ringleitung 12 eingesetzt sein. Im dargestellten Beispiel befindet sich die konventionelle Wärmequelle 2 in einer von der Ringleitung 12 abgehenden Bypass-Schleife 14, die wahlweise geöffnet bzw. stillgelegt werden kann, je nachdem ob die konventionelle Wärmequelle 2 benötigt wird oder nicht. Hierzu kann ein geeignetes Absperrventil 15 vorgesehen sein. Die konventionelle Wärmequelle 2 wird in Betrieb genommen und die Schleife 14 wird geöffnet, sobald die Ausgangstemperatur der Kollektoranordnung 1 unter eine vorgegebene Mindesttemperatur fällt. Dies kann ebenfalls mittels der Steuereinrichtung 7 bewerkstelligt werden, wie durch eine durch eine unterbrochene Linie dargestellte Signalleitung 16 angedeutet ist.

Jede der beiden Ringleitungen 11, 12 kann auch auf Kurzschlussbetrieb bestellt werden. Hierzu ist im Bereich jeder Ringleitung 11, 12 ein geeignetes Mehrwegeventil 17 bzw. 18 angeordnet. Der Kurzschlussbetrieb ermöglicht beispielsweise eine Verkürzung der Aufwärmphase bei der Inbetriebnahme der konventionellen Wärmequelle 2 und/oder der Kollektoranordnung 1 bzw. einen vom Betrieb der konventionellen Wärmequelle 2 unabhängigen Solekreislauf durch die Kollektoranordnung 1.

Zur Bildung des Wärmetauschers 10 kann jedes Wärmetauschorgan mit geeigneten Wärmedurchgangsflächen Verwendung finden. Zweckmäßig ist der Wärmetauscher 10 als Plattenwärmetauscher ausgebildet, der eine kompakte Bauweise gewährleistet.

## Patentansprüche

1. Vorrichtung zur Versorgung eines Wärmeverbrauchers (4) mit ambivalent erzeugbarer Wärme mit einem alle Komponenten der Vorrichtung enthaltenden Installationssystem (3), über das der Verbraucher (4) mit einer Kollektoranordnung (1) und einer dieser beigeordneten, konventionellen Wärmequelle (2) wärmetransportmäßig zusammenhängt, **dadurch gekennzeichnet, dass** die von der Kollektoranordnung (1) erzeugte Wärme ohne Zwischenspeicherung unmittelbar direkt oder indirekt dem Verbraucher (4) zuführbar ist, wobei das Installationssystem (3) zwischenspeicherlos ausgebildet und die Kollektoranordnung (1) mit einer Verschattungseinrichtung (5) versehen ist, die in Abhängigkeit von der Kollektortemperatur steuerbar ist.

2. Vorrichtung nach Anspruch 1, **dadurch gekennzeichnet, dass** das Installationssystem (3) einen Wärmetauscher (10) enthält, dessen Wärmeaufnahmeseite an eine über die Kollektoranordnung (1) führende Ringleitung (11) und dessen Wärmeabgabeseite an eine über den Verbraucher (4) führende Ringleitung (12) angeschlossen sind.

3. Vorrichtung nach Anspruch 2, **dadurch gekennzeichnet, dass** die über den Verbraucher (4) führende Ringleitung (12) eine wahlweise zu- und abschaltbare Schleife (14) mit der konventionellen Wärmequelle (2) enthält.

4. Vorrichtung nach einem der vorhergehen Ansprüche, **dadurch gekennzeichnet, dass** die konventionelle Wärmequelle (2) als Durchlauferhitzer ausgebildet ist.

5. Vorrichtung nach einem der vorhergehenden Ansprüche 2-4, **dadurch gekennzeichnet, dass** der Wärmetauscher (10) als flacher Plattenwärmetauscher ausgebildet ist.

6. Vorrichtung nach einem der vorhergehenden Ansprüche, **dadurch gekennzeichnet, dass** die Kollektoranordnung (1) so dimensioniert ist, dass bei mittlerer Sonneneinstrahlung der Durchschnittswärmebedarf des Verbrauchers (4) im Durchlaufbetrieb zumindest gedeckt ist.

7. Vorrichtung nach einem der vorhergehenden Ansprüche, **dadurch gekennzeichnet, dass** die Kollektoranordnung (1) eine Kollektorfläche von mindestens 40 m² aufweist.

8. Vorrichtung nach einem der vorhergehenden Ansprüche, **dadurch gekennzeichnet, dass** die Temperatur am Ausgang der Kollektoranordnung (1) auf 90° begrenzt ist und dass die Verschattungseinrichtung (5) beim Erreichen dieser Temperatur in Ausfahrrichtung betätigbar ist und umgekehrt.

9. Vorrichtung nach einem der vorhergehenden Ansprüche, **dadurch gekennzeichnet, dass** die Verschattungseinrichtung (5) als motorisch bewegbarer Rollvorhang ausgebildet ist.

10. Vorrichtung nach einem der vorhergehenden Ansprüche, **dadurch gekennzeichnet, dass** eine Steuereinrichtung (7) vorgesehen ist, die einen Eingang für einen im Bereich des Ausgangs der Kollektoranordnung (1) angeordneten Temperatursensor (8) und Ausgänge zum Steuern eines der Verschattungseinrichtung (5) zugeordneten Motors (6) sowie zur Aktivierung der konventionellen Wärmequelle (2) aufweist.
